# EUROPÄISCHE PATENTSCHRIFT

(11) **EP 2 141 290 B1**
(45) Veröffentlichungstag und Bekanntmachung des Hinweises auf die Patenterteilung: **29.07.2020**
(21) Anmeldenummer: 09004390.2
(22) Anmeldetag: 26.03.2009
(51) Int. Cl.: E02F 9/02, B60F 1/02, B60F 1/04

(54) **Zweiwegebagger**
Two-way excavator
Excavateur à deux trajectoires

(30) Priorität: 04.07.2008 DE 202008009037 U
(43) Veröffentlichungstag der Anmeldung: 06.01.2010
(73) Patentinhaber: Liebherr-Hydraulikbagger GmbH, 88457 Kirchdorf/Iller (DE)
(72) Erfinder: Meier, Simon, 87700 Memmingen (DE)
(74) Vertreter: Laufhütte, Dieter

(56) Entgegenhaltungen:
- EP-A- 1 182 302
- DE-A1- 4 041 970
- DE-U1-202006 017 727
- US-A- 4 708 066

## Beschreibung

Die vorliegende Erfindung betrifft einen Zweiwegebagger mit mindestens zwei Radachsen mit Rädern für die Straßenfahrt und mindestens zwei Schienenachsen mit Schienenrädern für die Schienenfahrt, wobei die Schienenachsen durch Hydraulikzylinder in eine Betriebsposition für die Schienenfahrt schwenkbar sind und die Hydraulikzylinder während der Schienenfahrt über eine Schienenfahrt-Hydrauliksteuerung angesteuert werden, und wobei mindestens eine erste Schienenachse für die Straßenfahrt umrüstbar ist, um während der Straßenfahrt eine weitere bereifte Achse zur Verfügung zu stellen. Ein solcher Zweiwegebagger ist aus DE 20 2006 017 727 U1 bekannt.

In Deutschland und in vielen anderen Staaten ist im Rahmen der Straßenverkehrsordnung die Achslast von Mobilbaggern zum Erlangen einer uneingeschränkten Fahrerlaubnis beschränkt. Um einen Zweiwegebagger mit einem Einsatzgewicht, welches über dem für zwei bereifte Achsen zulässigen Gesamtgewicht liegt, dennoch im Straßenverkehr verwenden zu dürfen, kann dabei bei dem in DE 20 2006 017 727 U1 gezeigten Zweiwegebagger mindestens eine der Schienenachsen für die Straßenfahrt umgerüstet werden. Durch diese Nutzbarmachung der ohnehin vorhandenen Schienenachse für die Straßenfahrt kann so das Gesamtgewicht auf mindestens drei Achsen verteilt werden und damit entsprechend höher ausfallen. Hierfür kann zum Beispiel ein Anbaurahmen mit mindestens einer zusätzlich bereiften Achse vorgesehen sein, welcher mit einer der Schienenachsen verbindbar ist. Alternativ können die Räder für die Straßenfahrt auch direkt auf die Schienenachse aufsetzbar seien. Auf den Inhalt der DE 20 2006 017 727 U1 wird dabei vollumfänglich Bezug genommen.

Die US 4,708,066 betrifft ein Fahrzeug, dass für den Straßen- und Schienenbetrieb geeignet ist. Das Fahrzeug weist drei bereifte Achsen für die Straßenfahrt und zwei Schienenachsen für die Schienenfahrt auf. Optional kann die hintere Schienenachse für die Straßenfahrt bereift und über einen Hydraulikzylinder in die Straßenfahrtposition verschenkt werden. Die Druckbeaufschlagung des Hydraulikzylinders und die Variation des Anpressdruckes der Schienenachse während der Straßenfahrt wird durch eine Pumpe in Verbindung mit einem elektrisch gesteuerten 4/3-Wegeventil gesteuert.

Aufgabe der vorliegenden Erfindung ist es, einen solchen Zweiwegebagger mit einer Steuerung für die Schienenachse auszurüsten, über welche diese für die Straßenfahrt genutzt werden kann.

Diese Aufgabe wird von einem Zweiwegebagger gemäß Anspruch 1 gelöst. Der erfindungsgemäße Zweiwegebagger weist dabei mindestens zwei Radachsen mit Rädern für die Straßenfahrt und mindestens zwei Schienenachsen mit Schienenrädern für die Schienenfahrt auf, wobei die Schienenachsen durch Hydraulikzylinder in eine Betriebsposition für die Schienenfahrt schwenkbar sind und die Hydraulikzylinder während der Schienenfahrt über eine Schienenfahrt-Hydrauliksteuerung angesteuert werden. Dabei ist mindestens eine erste Schienenachse für die Straßenfahrt umrüstbar, um während der Straßenfahrt als weitere bereifte Achse zu dienen. Ferner ist vorgesehen, eine von der Schienenfahrt-Hydrauliksteuerung unabhängige Straßenfahrt-Hydrauliksteuerung des oder der Hydraulikzylinder der mindestens einen ersten Schienenachse zur Verfügung zu stellen. Erfindungsgemäß sind die Zylinderböden der Hydraulikzylinder der mindestens einen ersten Schienenachse jeweils über ein separates Sperrventil mit der Straßenfahrt-Hydrauliksteuerung verbunden und die Zylinderstangenseiten der Hydraulikzylinder der mindestens einen ersten Schienenachse sind über ein gemeinsames Sperrventil mit der Straßenfahrt-Hydrauliksteuerung verbunden.

Hierdurch ergibt sich die Möglichkeit, bei vorhandenen Zweiwegebaggern die Straßenfahrt-Hydrauliksteuerung, mit welcher die Hydraulikzylinder der für die Straßenfahrt genutzten Schienenachse angesteuert werden, problemlos nachzurüsten. Zudem ergibt sich eine einfache Bedienung und Umsetzung der Steuerung, da nicht auf die üblicherweise erheblich kompliziertere Schienenfahrt-Hydrauliksteuerung zurückgegriffen werden muss. Weiterhin ergibt sich ein einfacher Aufbau, bei welchem der bisher übliche Zweiwege-Betrieb des Baggers (normale Straßenfahrt ohne die Zusatzachse sowie Schienenfahrt) nicht weiter beeinflußt wird. Durch die hydraulische Steuerung kann dabei auf einfache und bewährte Komponenten zurückgegriffen werden, so daß sich gegenüber elektrischen Ansteuerungen Vorteile ergeben.

Über die Sperrventile kann während des normalen Zweiwegebetriebs die Straßenfahrt-Hydrauliksteuerung von den Hydraulikzylindern getrennt werden, während für die Straßenfahrt mit Schienenachse die Straßenfahrt-Hydrauliksteuerung über die dann geöffneten Sperrventile auf den oder die Hydraulikzylinder zugreifen kann.

Vorteilhafterweise werden die Sperrventile dabei hydraulisch angesteuert, insbesondere über einen oder mehrere Kugelhähne. Hierdurch ergibt sich eine einfach zu bedienende Konstruktion, welche mit bewährten und kostengünstigen Komponenten aufgebaut werden kann. Vorteilhafterweise weisen die Kugelhähne dabei Rast-Positionen für den klassischen Zweiwegebetrieb und den Straßenfahrtbetrieb mit Zusatzachse auf.

Vorteilhafterweise weist die Straßenfahrt-Hydrauliksteuerung dabei einen ersten Schaltzustand auf, in dem die Sperrventile geschlossen sind, so daß die mindestens erste Schienenachse in ihrer Position verbleibt, und einen zweiten Schaltzustand, in welchem die Sperrventile geöffnet sind und der oder die Hydraulikzylinder der mindestens ersten Schienenachse so mit Druck beaufschlagt werden, daß die Schienenachse für die Straßenfahrt abgesenkt und vorteilhafterweise gegen den Boden gepreßt wird. Im ersten Schaltzustand ist die Straßenfahrt-Hydrauliksteuerung somit von den Hydraulikzylindern getrennt. In diesem Zustand kann entweder die normale Schienenfahrt-Hydrauliksteuerung auf Hydraulikzylinder zugreifen, oder aber die Hydraulikzylinder verbleiben unbewegt in ihrer Position. Im zweiten Schaltzustand kann dagegen die Schienenachse für die Straßenfahrt abgesenkt werden. Vorteilhafterweise läßt sich dabei der Anpreßdruck der Schienenachse über die Straßenfahrt-Hydrauliksteuerung einstellen.

Vorteilhafterweise weist die Straßenfahrt-Hydrauliksteuerung weiterhin einen dritten Schaltzustand auf, in welchem die Sperrventile geöffnet sind und die Hydraulikzylinder der mindestens ersten Schienenachse so mit Druck beaufschlagt werden, daß die Schienenachse angehoben wird. Hierdurch läßt sich die Schieneachse unabhängig von der Schienenfahrt-Hydrauliksteuerung zum Beispiel dann hochfahren, wenn ein Reifen an der zusätzlichen bereiften Achse gewechselt werden soll.

Vorteilhafterweise weist die erfindungsgemäße Straßenfahrt-Hydrauliksteuerung eine Drucksteuerung auf, insbesondere in Form eines Druckminderventils, über welche der Anpreßdruck der mindestens ersten Schienenachse während der Straßenfahrt einstellbar ist. Hierdurch wird insbesondere im zweiten Schaltzustand der Straßenfahrt-Hydrauliksteuerung der für die Straßenfahrt notwendige Anpreßdruck eingestellt. Vorteilhafterweise steht die Schienenachse dabei während der Straßenfahrt auf dem eingestellten Hydraulikdruck, so daß eine gewisse Federung über die Hydraulik gewährleistet ist. Vorteilhaferweise wird dabei der Druck über ein Druckminderventil bereitgestellt, auf welchem die Schienenachse während der Straßenfahrt steht.

Weiterhin vorteilhafterweise ist erfindungsgemäß ein Ventil mit mindestens zwei oder drei Schaltzuständen vorgesehen, über welches sowohl die Sperrventile angesteuert, als auch die Hydraulikzylinder der mindestens ersten Schienenachse mit Druck beaufschlagt werden. Über dieses Ventil lassen sich so einerseits die Sperrventile, welche die erfindungsgemäße Straßenfahrt-Hydrauliksteuerung mit den Hydraulikzylindern der mindestens ersten Schienenachse verbinden, ansteuern, und andererseits die unterschiedlichen Schaltzustände der Straßenfahrt-Hydrauliksteuerung bereitstellen. Vorteilhafterweise weist dieses Ventil dabei drei Schaltzustände auf. Zum Beispiel kann hierfür ein Kugelhahn vorgesehen sein.

Alternativ kann erfindungsgemäß ein erstes Ventil mit mindestens zwei Schaltzuständen vorgesehen sein, über welches die Sperrventile angesteuert werden, und ein zweites Ventil mit mindestens zwei Schaltzuständen, über welches die Hydraulikzylinder der mindestens ersten Schienenachse mit Druck beaufschlagt werden. Hierdurch ergibt sich ebenfalls eine einfache Ansteuerung über nur zwei Ventile, die ebenfalls vorteilhafterweise als Kugelhähne ausgeführt sind.

Die vorliegende Erfindung wird nun anhand von Ausführungsbeispielen sowie Zeichnungen näher dargestellt.

Dabei zeigen
- Figur 1:: ein erstes Ausführungsbeispiel eines erfindungsgemäßen Zweiwegebaggers,
- Figur 2:: ein zweites Ausführungsbeispiel eines erfindungsgemäßen Zweiwegebaggers,
- Figur 3:: ein erstes Ausführungsbeispiel einer erfindungsgemäßen Schienenfahrt-Hydrauliksteuerung und
- Figur 4:: ein zweites Ausführungsbeispiel einer erfindungsgemäßen Schienenfahrt-Hydrauliksteuerung.

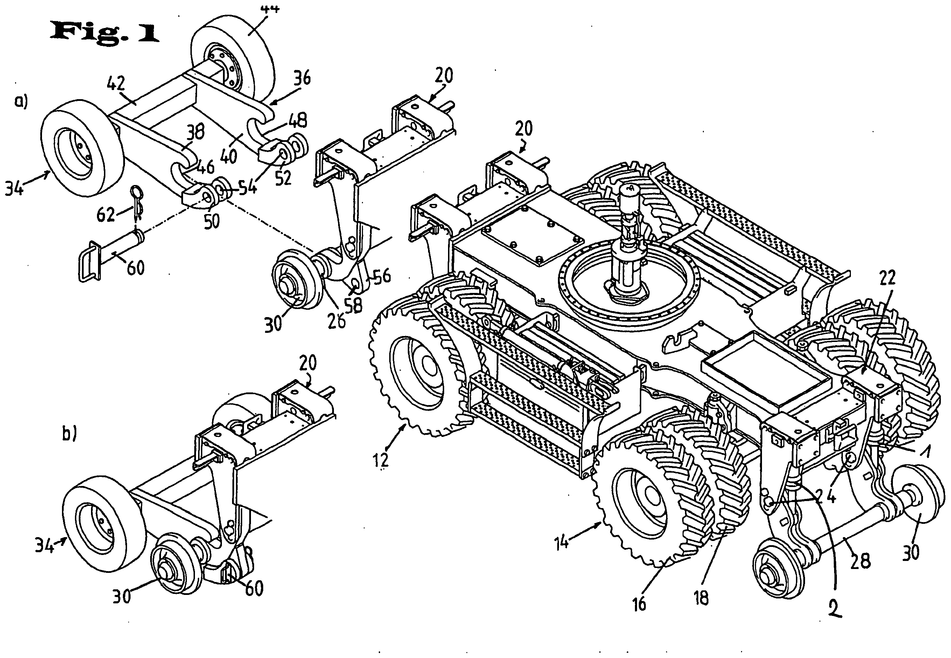

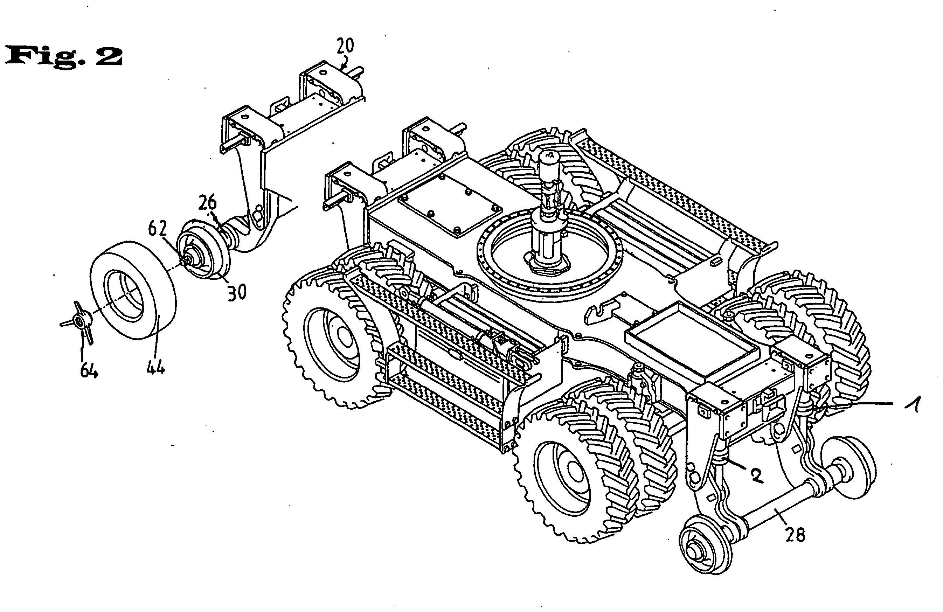

In Figuren 1 und 2 sind zwei Ausführungsbeispiele eines erfindungsgemäßen Zweiwegebaggers gezeigt, wobei die in Figuren 1 und 2 gezeigte mechanische Ausführung des Unterwagens bereits aus DE 20 2006 017 727 U1 bekannt ist.

In Figur 1 ist ein Unterwagen eines in seinem Aufbau an sich bekannten Zweiwegebaggers gezeigt. Der hier nicht dargestellte Oberwagen ist in üblicher Weise aufgebaut. Insbesondere ist der Oberwagen um eine vertikale Achse drehbar auf dem Unterwagen angeordnet und trägt einen hydraulisch bewegbaren Baggerstiel mit einem Arbeitswerkzeug, insbesondere einer Baggerschaufel.

Der Unterwagen weist zwei Achsen 12 und 14 auf, die jeweils mit Zwillingsrädern 16, 18 für die Straßenfahrt ausgerüstet sind. Die Achse 12 ist als Starrachse ausgelegt, während die Achse 14 eine gelenkte Achse ist. Wie es schon bei Zweiwegebaggern bekannt ist, sind an beiden freien Enden, also an der Vorderseite und an der Hinterseite des Unterwagens 10 Anbauten 20 und 22 angeordnet, die zusätzliche um Schwerpunkte 24 schwenkbare Achsen 26 und 28 tragen. Die Achsen 26 und 28 tragen wiederum Räder 30 für die Schienenfahrt. Die Achsen 26 und 28 sind jeweils über Hydraulikzylinder 1 und 2 verschwenkbar. In Figur 1 sind die Achsen 26 und 28 in ausgeschwenkter Position, das heißt Fahrposition, gezeigt. Über die Hydraulikzylinder 1 und 2 können sie um die Schwenkachsen 24 nach oben verschwenkt werden. In diesem Fall ist der Zweiwegebagger dann für die Straßenfahrt bereit.

In der Figur 1 ist mit a und b jeweils der vordere Anbau 20 in zwei unterschiedlichen Bauversionen dargestellt. Entsprechend der hier vorliegenden Erfindung kann der Zweiwegebagger durch Anbau einer Achse 34 für die Straßenfahrt derart umgerüstet werden, dass auch ein Zweiwegebagger mit einem Fahrgewicht von über 18 t ohne Sondererlaubnis straßenfahrtauglich ist. Gemäß der hier vorliegenden Ausführungsform ist die schwenkbare Achse 26 zur Straßenfahrt umrüstbar. Im in Figur 1 dargestellten Ausführungsbeispiel wird hierzu die zusätzliche Achse 34 für die Straßenfahrt über einen Anbaurahmen 36 an die Achse 26 angebaut.

Der Anbaurahmen 36 weist zwei Träger 38 und 40 sowie einen Querträger 42 auf. Die zusätzliche Achse 34 ist in dem Querträger 42 gelagert. An den jeweiligen Enden der Achse 34 sind Räder 44 für die Straßenfahrt angeordnet.

Wie in den Figuren 1a und 1b gezeigt kann der Anbaurahmen 36 in einfacher Art und Weise an die schwenkbare Achse 26 angebaut werden. Hierzu sind an den freien Enden der Träger 38 und 40 jeweils Ausnehmungen 46 und 48 vorgesehen, die die schwenkbaren Achsen 26 in Anbauzustand (vgl. Figur 1b) zumindest teilweise umgreifen. Gleichzeitig sind an den freien Enden der Träger gabelartige Vorsprünge 50 und 52, in denen Bohrungen 54 vorgesehen sind, angeordnet. Die gabelartigen Vorsprünge 50 und 52 umgreifen im eingebauten Zustand einen am Anbau 20 vorgesehenen Vorsprung 56, der ebenfalls eine Bohrung 58 aufweist. Über einen Bolzen 60 kann im angebauten Zustand der Anbaurahmen 36 mit der schwenkbaren Achse 26 fest verbunden werden. In üblicher Weise kann der Bolzen in eingesteckter Position über einen Sicherheitssplint 62 vor dem Herausfallen gesichert werden. In Figur 1b ist der eingebaute Zustand gezeigt.

Eine alternative Ausführungsvariante des erfindungsgemäßen Zweiwegebaggers ergibt sich aus der Figur 2. Hier ist der Unterwagen in gleicher Weise aufgebaut wie im Ausführungsbeispiel gemäß Figur 1, so dass hier auf die dortigen Ausführungen verwiesen werden kann.

Im hier dargestellten Ausführungsbeispiel werden die Räder 44 unmittelbar auf die Räder für die Schienenfahrt 30 aufgesetzt, so dass keine zusätzlichen Achsen für die Straßenfahrt eingebaut werden müssen. Vielmehr können die bereits vorhandenen Achsen 26 bzw. gegebenenfalls 28 verwendet werden. In hier nicht näher im Detail dargestellten Art und Weise sind die Felgen der Räder 44 für die Straßenfahrt derart ausgebildet, dass sie auf die Räder für die Schienenfahrt 30 aufsetzbar sind. Im hier dargestellten Ausführungsbeispiel ist an dem Rad für die Schienenfahrt 30 eine Schraubnabe 62 dargestellt, auf die eine Sicherungsmutter 64 aufschraubbar ist, um das Rad für die Straßenfahrt 44 auf dem Rad für die Schienenfahrt 30 zu befestigen. Selbstverständlich kann jede denkbare Art für ein Aufsetzen des Rads 44 auf das Rad 30 im Rahmen der Erfindung zur Anwendung kommen

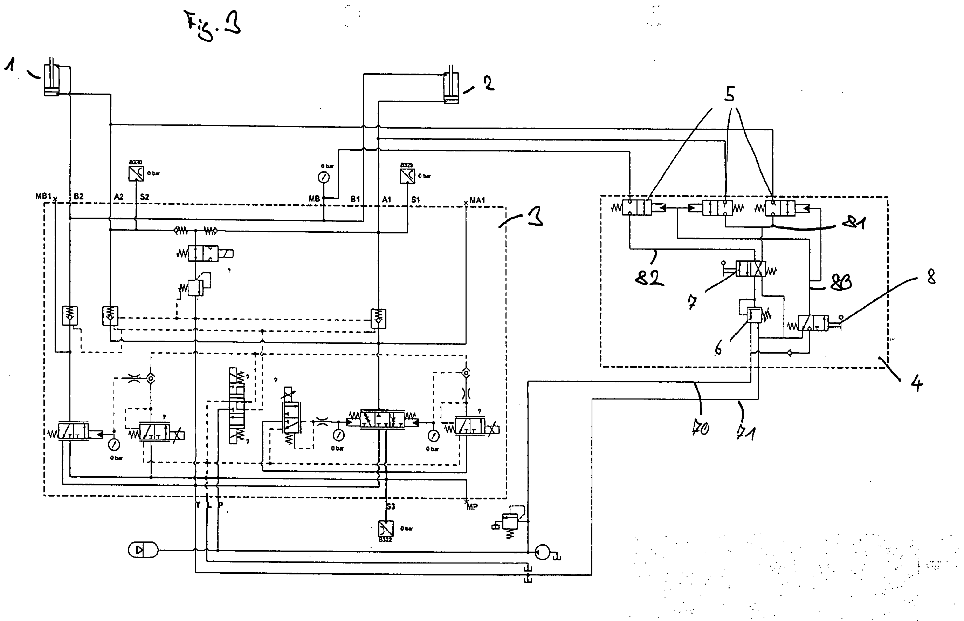

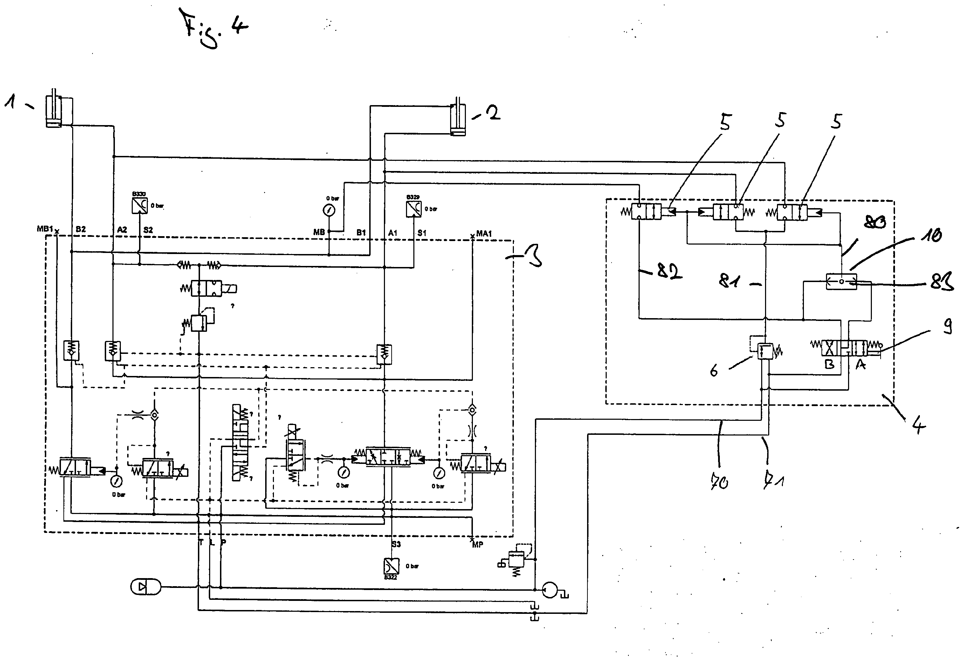

Figur 3 zeigt nun einen Schaltplan eines ersten Ausführungsbeispiels einer Hydrauliksteuerung, über welche die Schwenkzylinder 1 und 2 der schwenkbaren Schienenachse 26 angesteuert werden. Dabei ist eine Schienenfahrt-Hydrauliksteuerung 3 vorgesehen, über welche die beiden Hydraulikzylinder 1 und 2 während der Schienenfahrt angesteuert werden. Die Schienenfahrt-Hydrauliksteuerung 3 kann dabei beliebig ausgeführt sein, so daß auf die konkrete, in Figur 3 und 4 gezeigte Ausführung hier nicht weiter eingegangen werden muß. Üblicherweise ist hier jedoch eine komplexe Steuerung vorgesehen.

Erfindungsgemäß ist nun neben der Schienenfahrt-Hydrauliksteuerung 3 eine Straßenfahrt-Hydrauliksteuerung 4 vorgesehen, welche von der Schienenfahrt-Hydrauliksteuerung 3 unabhängig ist. Über die Straßenfahrt-Hydrauliksteuerung 4 können dabei die beiden Hydraulikzylinder 1 und 2 der Schienenachse 26, welche für die Straßenfahrt umrüstbar ist, während der Straßenfahrt angesteuert werden. Hierdurch wird eine einfache Schienenfahrwerkshydraulik für die Benutzung der Schienenräder im Straßenverkehr zur Verfügung gestellt, welche unabhängig von der bereits vorhandenen Zweiwegesteuerung 3 ist.

Dabei sind erfindungsgemäß Sperrventile 5 vorgesehen, welche mit den Drucckammern der Hydraulikzylinder 1 und 2 in Verbindung stehen. Die Zylinderböden der Hydraulikzylinder 1 und 2, auf welchen der Zweiwegebagger bei abgesenkter Schienenachse steht, sind dabei jeweils über ein separates Sperrventil 5 mit der Straßenfahrt-Hydrauliksteuerung 4 verbunden. Die Zylinderstangenseiten sind dagegen über ein gemeinsames Sperrventil mit der Straßenfahrt-Hydrauliksteuerung 4 verbunden. Hierdurch wird die getrennte Ansteuerung der Zylinderböden der Hydraulikzylinder 1 und 2 durch die Schienenfahrt-Hydrauliksteuerung 3 berücksichtigt, so daß sich bei geschlossenen Sperrventilen 5 keinerlei Beeinflussung der Schienenfahrt-Hydrauliksteuerung ergibt.

Alle Sperrventile 5 werden dabei über eine gemeinsame Steuerleitung 80 angesteuert, so daß entweder alle Sperrventile geöffnet oder alle Sperrventile geschlossen sind. Die beiden Sperrventile für die Zylinderböden verbinden dabei eine gemeinsame Hydraulikleitung 81 mit den jeweiligen Zylinderböden. Das den beiden Zylinderstangenseiten zugeordnete Sperrventil verbindet dagegen eine Hydraulikleitung 82 mit den beiden Zylinderstangenseiten. Zur Ansteuerung der Sperrventile 5 ist ein Kugelhahn 8 vorgesehen, welcher in einer ersten Position die Steuerleitung 80 der drei Sperrventile 5, wie in Figur 3 dargestellt, mit der auf Rücklaufdruck liegenden Rücklaufdruckleitung 71 verbindet, so daß die Sperrventile 5 sperren und die Straßenfahrt-Hydrauliksteuerung 4 von den Hydraulikzylindern 1 und 2 trennen. In einer zweiten Position des Ventils 8 verbindet dieses dagegen die Steuerleitung 80 mit der Druckleitung 70, so daß die Sperrventile 5 aufgesteuert werden.

Weiterhin ist ein Druckminderventil 6 vorgesehen, welches an der Hochdruckleitung 70 und der Rücklaufdruckleitung 71 angeschlossen ist und an seinem Ausgang ein einstellbares Druckniveau bereitstellt. Über einen weiteren Kugelhahn 7 kann die Hydraulikleitung 81, welche über die Sperrventile mit den Zylinderböden verbindbar ist, wahlweise mit dem Ausgang des Druckminderventils 6 oder der Rücklaufdruckleitung verbunden werden. Gleichzeitig wird hierdurch die Hydraulikleitung 82, welche über ein Sperrventil mit den Zylinderstangenseiten verbindbar ist, mit der Rücklaufdruckleitung oder dem Ausgang des Druckminderventils 6 verbunden. Die beiden Kugelhähne 7 und 8 haben dabei in beiden Stellungen Rastpositionen.

An der Straßenfahrt-Hydrauliksteuerung 4, welche zum Beispiel als Steuerblock ausgeführt sein kann, liegt dabei ein Druckniveau von mehr als 50 bar zum Beispiel aus dem Lüfterkreislauf der Zweiwege-Hydraulik an der Hochdruckleitung 70 dauernd an. Da in der gezeigten Position des Kugelhahns 8 die Sperrventile 4 jedoch geschlossen sind, entsteht keine Beeinflussung im bereits vorhandenen Zweiwege-Betrieb. Hierdurch wird die Steuerung einfach gehalten und Verluste vermieden.

Wird der Kugelhahn 8 dagegen in seine gegenteilige Position bewegt, in welcher er eine Rastfunktion aufweist, werden die Sperrventile 5 aufgesteuert. Die rechts angeordneten zwei Sperrventile verbinden dabei die beiden Fahrwerkszylinderböden der Hydraulikzylinder 1 und 2 mit dem Druckminderventil 6. Das Ventil 6 dient dabei zur Anpreßdruckeinstellung des Fahrwerks. Das links dargestellte Sperrventil verbindet dagegen die beiden Fahrwerkszylinderstangenseiten mit dem Tank. Hierdurch steht die zur bereiften Achse umgerüstete Schienenachse auf dem Druck des Druckminderventils 6. Die Verbindung der Zuführleitung der Sperrventile 5 mit dem Druckminderventil 6 beziehungsweise dem Tank erfolgt dabei über den Kugelhahn 7, welcher in der gezeigten Position ebenfalls eine Rastfunktion aufweist. Wird der Kugelhahn 7 dagegen in die umgekehrte Position gestellt, in welcher er keine Rastfunktion aufweist, werden die beiden Fahrwerkszylinderstangenseiten mit dem am Ausgang des Druckminderventils 6 anliegenden Hochdruck beaufschlagt, während die Zylinderbögen auf Rücklaufdruck liegen. Hierdurch fährt das Fahrwerk nach oben, um zum Beispiel einen Reifenwechsel zu ermöglichen. Die Sperrventile 5 sind dabei weiterhin aufgesteuert.

Wird dagegen der Kugelhahn 8 in seine in Figur 3 gezeigte Stellung gedreht, sind die Sperrventile 5 geschlossen, so daß das Fahrwerk, wenn es nicht über die Schienenfahrt-Hydrauliksteuerung 3 angesteuert wird, in Position gehalten wird.

In Figur 4 ist ein zweites Ausführungsbeispiel der erfindungsgemäßen Straßenfahrt-Hydrauliksteuerung gezeigt. Die Verschaltung der Sperrventile 5 mit den Hydraulikzylindern 1 und 2 ist dabei mit der im ersten Ausführungsbeispiel beschriebenen Ausführung identisch, so daß die entsprechende Beschreibung nicht nochmals wiederholt werden muß. Zudem weisen auch hier die Sperrventile 5 eine gemeinsame Steuerleitung 80 auf, so daß sie entweder alle auf- oder alle zusteuern.

Im zweiten Ausführungsbeispiel ist nun mit der gemeinsamen Hydraulikleitung 81, welche über die rechts dargestellten Sperrventile mit den Zylinderböden verbindbar ist, ein Druckminderventil 6 fest verschaltet. Die mit den Zylinderstangenseiten verbindbare Hydraulikleitung 82 ist dagegen über den Kugelhahn 9 wahlweise mit der Hochdruckleitung 70 oder der Rücklaufdruckleitung 71 verbindbar. Der Kugelhahn weist dabei drei Positionen auf, über welche sowohl die Ansteuerung der Sperrventile 5, als auch die Beaufschlagung der Zylinderkammern der Hydraulikzylinder 1 und 2 gesteuert werden. In den Positionen A oder B des Kugelhahnes 9 wird dabei die Steuerleitung 80 über das Doppelrückschlagventil 83 jeweils mit Druck beaufschlagt, so daß die Sperrventile 5 aufsteuern. In Position A verbinden die Sperrventile die beiden Fahrwerkszylinderböden mit dem Druckminderventil 6, die Fahrwerkszylinderstangenseiten dagegen mit dem Tank, so daß das Fahrwerk auf dem Druck des Ventils 6 steht. In der Position B bleiben die Sperrventile 5 aufgesteuert, während die Fahrwerkszylinderstange mit Hochdruck beaufschlagt wird. Hierdurch kann das Fahrwerk hochgefahren werden.

In der Mittelstellung des Kugelhahns 9 werden die Sperrventile 5 dagegen geschlossen, so daß das Fahrwerk in Position gehalten wird.

Erfindungsgemäß wird damit durch die Straßenfahrt-Hydrauliksteuerung eine einfach nachrüstbare Steuerung an die Hand gegeben, welche von der bisher vorhandenen Zweiwegesteuerung unabhängig ist. Die Hydrauliksteuerung für die Straßenfahrt ist dabei einfach aufgebaut und aus wenigen bewährten Komponenten kostengünstig herstellbar. Die Ansteuerung über einen oder zwei Kugelhähne ermöglicht dabei sichere Positionen einerseits für die klassische Zweiwegesteuerung und andererseits für den Fahrbetrieb mit abgesenkter Schienenachse, welche für die Straßenfahrt umgerüstet wurde.

## Patentansprüche

1. Zweiwegebagger mit mindestens zwei Radachsen mit Rädern (12, 14) für die Straßenfahrt und mindestens zwei Schienenachsen (26, 28) mit Schienenrädern (30) für die Schienenfahrt, wobei die Schienenachsen (26, 28) durch Hydraulikzylinder (1, 2) in eine Betriebsposition für die Schienenfahrt schwenkbar sind und die Hydraulikzylinder (1, 2) während der Schienenfahrt über eine Schienenfahrt-Hydrauliksteuerung (3) angesteuert werden, und wobei mindestens eine erste Schienenachse (26) für die Straßenfahrt umrüstbar ist, um während der Straßenfahrt eine weitere bereifte Achse zur Verfügung zu stellen, wobei eine von der Schienenfahrt-Hydrauliksteuerung (3) unabhängige Straßenfahrt-Hydrauliksteuerung (4) des Hydraulikzylinders (1, 2) der mindestens einen ersten Schienenachse (26, 28) vorgesehen ist,
**dadurch gekennzeichnet, dass** zumindest zwei Hydraulikzylinder (1, 2) Schwenken der mindestens einen ersten Schienenachse (26, 28) vorgesehen sind und
dass die Zylinderböden der Hydraulikzylinder (1, 2) der mindestens einen ersten Schienenachse (26, 28) jeweils über ein separates Sperrventil (5) mit der Straßenfahrt-Hydrauliksteuerung (4) verbunden sind und die Zylinderstangenseiten der Hydraulikzylinder (1, 2) der mindestens einen ersten Schienenachse (26, 28) über ein gemeinsames Sperrventil (5) mit der Straßenfahrt-Hydrauliksteuerung (4) verbunden sind.

2. Zweiwegebagger nach Anspruch 1, wobei die Sperrventile hydraulisch angesteuert werden, insbesondere über einen oder mehrere Kugelhähne.

3. Zweiwegebagger nach Anspruch 1 oder 2, wobei die Straßenfahrt-Hydrauliksteuerung einen ersten Schaltzustand aufweist, in dem die Sperrventile geschlossen sind, so dass die mindestens erste Schienenachse in Position verbleibt, und einen zweiten Schaltzustand, in welchem die Sperrventile geöffnet sind und der oder die Hydraulikzylinder der mindestens ersten Schienenachse so mit Druck beaufschlagt werden, dass die Schienenachse für die Straßenfahrt abgesenkt und vorteilhafterweise gegen den Boden gepresst wird.

4. Zweiwegebagger nach Anspruch 3, wobei die Straßenfahrt-Hydrauliksteuerung einen dritten Schaltzustand aufweist, in welchem die Sperrventile geöffnet sind und der oder die Hydraulikzylinder der mindestens ersten Schienenachse so mit Druck beaufschlagt werden, dass die Schienenachse angehoben wird.

5. Zweiwegebagger nach einem der vorangegangenen Ansprüche, wobei die Straßenfahrt-Hydrauliksteuerung eine Drucksteuerung aufweist, insbesondere in Form eines Druckminderventils, über welche der Anpressdruck der mindestens ersten Schienenachse während der Straßenfahrt einstellbar ist.

6. Zweiwegebagger nach einem der Ansprüche 3 oder 4, wobei ein Ventil mit mindestens zwei oder drei Schaltzuständen vorgesehen ist, über welches sowohl die Sperrventile angesteuert als auch der oder die Hydraulikzylinder der mindestens ersten Schienenachse mit Druck beaufschlagt werden.

7. Zweiwegebagger nach einem der Ansprüche 3 oder 4, wobei ein erstes Ventil mit mindestens zwei Schaltzuständen vorgesehen ist, über welches die Sperrventile angesteuert werden, und ein zweites Ventil mit mindestens zwei Schaltzuständen, über welches der oder die Hydraulikzylinder der mindestens ersten Schienenachse mit Druck beaufschlagt werden.

## Claims

1. Two-way excavator comprising at least two wheel axles having wheels (12, 14) for road travel and at least two rail axles (26, 28) having rail wheels (30) for rail travel, wherein the rail axles (26, 28) are pivotable into an operating position for rail travel by hydraulic cylinders (1, 2) and, during rail travel, the hydraulic cylinders (1, 2) are actuated via a rail-travel hydraulic controller (3), and wherein at least one first rail axle (26) is convertible for road travel in order to provide another wheeled axle during road travel, wherein a road-travel hydraulic controller (4) of the hydraulic cylinder (1, 2) of the at least one first rail axle (26, 28), which controller is independent of the rail-travel hydraulic controller (3), is provided,
**characterized in that** at least two hydraulic cylinders (1, 2) are provided for pivoting the at least one first rail axle (26, 28) and **in that** the cylinder bases of the hydraulic cylinders (1, 2) of the at least one first rail axle (26, 28) are each connected to the road-travel hydraulic controller (4) by a separate shut-off valve (5) and the cylinder-rod sides of the hydraulic cylinders (1, 2) of the at least one first rail axle (26, 28) are connected to the road-travel hydraulic controller (4) by a common shut-off valve (5).

2. Two-way excavator according to claim 1, wherein the shut-off valves are actuated hydraulically, in particular by one or more ball valves.

3. Two-way excavator according to claim 1 or 2, wherein the road-travel hydraulic controller has a first switching state, in which the shut-off valves are closed such that the at least one first rail axle remains in position, and a second switching state, in which the shut-off valves are open and pressure is applied to the hydraulic cylinder(s) of the at least one first rail axle such that the rail axle is lowered for road travel and is advantageously pressed against the ground.

4. Two-way excavator according to claim 3, wherein the road-travel hydraulic controller has a third switching state, in which the shut-off valves are open and pressure is applied to the hydraulic cylinder(s) of the at least one first rail axle such that the rail axle is raised.

5. Two-way excavator according to any of the preceding claims, wherein the road-travel hydraulic controller comprises a pressure controller, in particular in the form of a pressure-reducing valve, by means of which the contact pressure of the at least one first rail axle can be adjusted during road travel.

6. Two-way excavator according to any of claims 3 or 4, wherein a valve having at least two or three switching states is provided, by means of which both the shut-off valves are actuated and pressure is applied to the hydraulic cylinder(s) of the at least one first rail axle.

7. Two-way excavator according to any of claims 3 or 4, wherein a first valve having at least two switching states is provided, by means of which the shut-off valves are actuated, and a second valve having at least two switching states is provided, by means of which pressure is applied to the hydraulic cylinder(s) of the at least one first rail axle.

## Revendications

1. Excavatrice rail-route comprenant au moins deux essieux routiers dotés de roues (12, 14) pour la circulation sur route et au moins deux essieux ferroviaires (26, 28) dotés de roues ferroviaires (30) pour la circulation sur rail, les essieux ferroviaires (26, 28) pouvant être pivotés par des vérins hydrauliques (1, 2) dans une position de fonctionnement pour la circulation sur rail et les vérins hydrauliques (1, 2) étant commandés pendant la circulation sur rail par le biais d'un dispositif de commande hydraulique pour circulation sur rail (3), et au moins un premier essieu ferroviaire (26) pouvant être converti pour la circulation sur route, pour mettre à disposition, pendant la circulation sur route, un essieu supplémentaire équipé de pneus, un dispositif de commande hydraulique pour circulation sur route (4), indépendant du dispositif de commande hydraulique pour circulation sur rail (3), du vérin hydraulique (1, 2) de l'au moins un premier essieu ferroviaire (26, 28) étant prévu,
**caractérisé en ce qu'**au moins deux vérins hydrauliques (1, 2) sont prévus pour pivoter l'au moins un premier essieu ferroviaire (26, 28) et
**en ce que** les fonds de vérin des vérins hydrauliques (1, 2) de l'au moins un premier essieu ferroviaire (26, 28) sont reliés au dispositif de commande hydraulique pour circulation sur route (4) respectivement par le biais d'au moins une soupape d'arrêt (5) séparée et les côtés tige de vérin des vérins hydrauliques (1, 2) de l'au moins un premier essieu ferroviaire (26, 28) sont reliés au dispositif de commande hydraulique pour circulation sur route (4) par le biais d'une soupape d'arrêt (5) commune.

2. Excavatrice rail-route selon la revendication 1, dans laquelle les soupapes d'arrêt sont à commande hydraulique, en particulier par le biais d'un ou de plusieurs robinets à boisseau sphérique.

3. Excavatrice rail-route selon la revendication 1 ou 2, dans laquelle le dispositif de commande hydraulique pour circulation sur route comporte un premier état de commutation, dans lequel les soupapes d'arrêt sont fermées, de telle sorte que l'au moins un premier essieu ferroviaire reste en position, et un deuxième état de commutation, dans lequel les soupapes d'arrêt sont ouvertes et le ou les vérins hydrauliques de l'au moins un premier essieu ferroviaire sont alimentés en pression de telle manière que l'essieu ferroviaire est descendu pour la circulation sur route et avantageusement appuyé sur le sol.

4. Excavatrice rail-route selon la revendication 3, dans laquelle le dispositif de commande hydraulique pour circulation sur route comporte un troisième état de commutation, dans lequel les soupapes d'arrêt sont ouvertes et le ou les vérins hydrauliques de l'au moins un premier essieu ferroviaire sont sollicités en pression de telle manière que l'essieu ferroviaire est levé.

5. Excavatrice rail-route selon l'une des revendications précédentes, dans laquelle le dispositif de commande hydraulique pour circulation sur route comporte un dispositif de commande de pression, en particulier sous la forme d'une soupape réductrice de pression, par le biais de laquelle la pression d'appui de l'au moins un premier essieu ferroviaire peut être réglée pendant la circulation sur route.

6. Excavatrice rail-route selon la revendication 3 ou 4, dans laquelle une soupape dotée d'au moins deux ou trois états de commutation est prévue, par le biais de laquelle les soupapes d'arrêt sont commandées et le ou les vérins hydrauliques de l'au moins un premier essieu ferroviaire sont sollicités en pression.

7. Excavatrice rail-route selon la revendication 3 ou 4, dans laquelle sont prévues une première soupape dotée d'au moins deux états de commutation, par le biais de laquelle les soupapes d'arrêt sont commandées, et une seconde soupape dotée d'au moins deux états de commutation, par le biais de laquelle le ou les vérins hydrauliques de l'au moins un premier essieu ferroviaire sont sollicités en pression.
